# EUROPÄISCHE PATENTSCHRIFT

(11) **EP 3 559 487 B1**
(45) Veröffentlichungstag und Bekanntmachung des Hinweises auf die Patenterteilung: **22.07.2020**
(21) Anmeldenummer: 18704891.3
(22) Anmeldetag: 29.01.2018
(51) Int. Cl.: F16B 41/00, B60R 13/08, F16B 5/02

(54) **VERLIERSICHERUNG UND MONTAGEHILFE FÜR EIN ABSCHIRMBLECH**
LOSS PREVENTION DEVICE AND ASSEMBLY ASSISTANCE FOR A SCREENING PLATE
DISPOSITIF DE PROTECTION ANTI-PERTE ET AUXILIAIRE DE MONTAGE D'UNE TÔLE DE BLINDAGE

(30) Priorität: 21.04.2017 DE 102017108564
(43) Veröffentlichungstag der Anmeldung: 30.10.2019
(73) Patentinhaber: Federal-Mogul Sealing Systems Gmbh, 57562 Herdorf (DE)
(72) Erfinder: KRUS, Ralf, 51789 Lindlar (DE)
(74) Vertreter: Becker & Kurig Partnerschaft Patentanwälte PartmbB
(86) Internationale Anmeldenummer: PCT/EP2018/052034
(87) Internationale Veröffentlichungsnummer: WO 2018/192693

(56) Entgegenhaltungen:
- EP-A2- 1 818 648
- DE-C1- 3 246 180
- US-A- 1 881 836
- US-A1- 2015 228 959

## Beschreibung

### Gebiet der Erfindung

Die vorliegende Erfindung betrifft eine Montagehilfe für Abschirmbleche (allgemeiner für flache Bauteile), die beispielsweise in Kraftfahrzeugen zum Einsatz kommen, um hitzeempfindliche Bauteile vor Strahlungshitze zu schützen, welche von abgasführenden Bauteilen ausgeht. Hierbei liegt die Montagehilfe in Form einer Verliersicherung für Befestigungselemente z.B. Schrauben vor.

### Stand der Technik

Abschirmbleche werden üblicherweise unter Zuhilfenahme von Distanzscheiben, -hülsen oder -haltern in an dafür vorgesehenen Trägerelementen am Motor, an Motorkomponenten oder am Fahrzeugrahmen verschraubt. Dazu wird das Abschirmblech zunächst in die Einbauposition gebracht und anschließend werden separat Befestigungsschrauben zugeführt, die durch Löcher am Abschirmblech geführt werden und verschraubt werden. Es ist also während des Einbauvorgangs notwendig die Schrauben einzelnen aufzunehmen und durch die Löcher im Abschirmblech zu stecken, was einen relativ großen Zeitaufwand bedeutet.

DE 3246180 C1 offenbart eine Verliersicherung für ein Befestigungselement gemäß dem Oberbegriff des angehängten Anspruchs 1.

Ziel der vorliegenden Erfindung ist es eine Verliersicherung bzw. Verliersicherungsvorrichtung zur Verfügung zu stellen, die es ermöglicht diesen Vorgang zu vereinfachen und zu beschleunigen. Weiterhin soll die Verliersicherung für dünne Bleche geeignet sein und es ermöglichen, Fertigungstoleranzen auszugleichen.

### Zusammenfassung der Erfindung

Das Problem wird gelöst durch eine Verliersicherung für ein Befestigungselement gemäß den Merkmalen des angehängten Anspruchs 1.

Die Verliersicherung umfasst eine Fixierscheibe mit einer Öffnung für das Befestigungselement; wobei die Fixierscheibe einen flachen Ringabschnitt, der die Öffnung umgibt, und mindestens zwei Federarme, die an einem radial inneren Rand des Ringabschnitts angeordnet sind und sich in eine Richtung im Wesentlichen senkrecht zum Ringabschnitt erstrecken, umfasst; wobei jeder der Federarme in der Nähe eines freien Federarmendes jeweils eine Auswölbung radial nach außen aufweist; und wobei die Federarmenden radial nach innen gebogen sind.

Gemäß einem Aspekt der vorliegenden Erfindung können die Federarmenden konfiguriert sein, mit dem Befestigungselement in Eingriff zu stehen.

Gemäß einem weiteren Aspekt können die Federarmenden den radial am weitesten innenliegenden Teil der Fixierscheibe bilden.

Gemäß einem weiteren Aspekt können sich die Federarme in Umfangrichtung jeweils über einen Winkelbereich von 10° bis 45°, bevorzugt 20° bis 30°, erstrecken.

Gemäß der vorliegenden Erfindung umfasst die Verliersicherung weiterhin eine Distanzscheibe ; wobei die Federarme durch eine Öffnung in der Distanzscheibe mit der Distanzscheibe in Eingriff gebracht werden können; und wobei ein radial größter Abstand der Auswölbungen von einer Mittelachse größer ist als ein Radius der Öffnung der Distanzscheibe.

Gemäß einem weiteren Aspekt kann die Öffnung der Distanzscheibe in einem oberen Bereich einen kleineren Durchmesser aufweisen als in einem unteren Bereich.

Gemäß einem weiteren Aspekt kann die Distanzscheibe innen an dem die Öffnung umgebenden Rand abgerundet sein.

Gemäß einem weiteren Aspekt kann die Distanzscheibe aus einem Elastomer bestehen.

Gemäß einem anderen Aspekt der vorliegenden Erfindung wird ein Abschirmblech mit Montagehilfe für ein Motorbauteil bereitgestellt, wobei das Abschirmblech mit mindestens einem Durchgangsloch für ein Befestigungselement versehen ist; und wobei das Abschirmblech mindestens eine Verliersicherung umfasst; wobei die Fixierscheibe und die Distanzscheibe der mindestens einen Verliersicherung an gegenüberliegenden Seiten des Abschirmblechs angeordnet sind, wobei die Federarme der Fixierscheibe durch das Durchgangsloch bzw. eines der Durchgangslöcher hindurchverlaufen und von innen mit der Distanzscheibe in Eingriff stehen.

Gemäß einem weiteren Aspekt kann ein Durchmesser des mindestens einen Druchgangslochs größer sein als ein Durchmesser der Öffnungen der Fixier- und der Distanzscheibe.

Gemäß einem weiteren Aspekt kann ein Durchmesser des mindestens einen Druchgangslochs größer sein als eine radial äußere Abmessung der Federarme, wobei die äußeren Durchmesser von Ringabschnitt und Distanzscheibe größer sind als der Durchmesser des mindestens einen Durchgangslochs.

Gemäß einem weiteren Aspekt kann das Abschirmblech mit Montagehilfe weiterhin mindestens ein Befestigungselement umfassen, das in der mindestens einen Verliersicherung verliersicher angeordnet ist.

### Kurze Beschreibung der Zeichnung

Im Folgenden werden beispielhafte Ausführungsformen der Erfindung unter Bezug auf die
Figuren genauer beschrieben, wobei
Figur 1 eine Schnittansicht einer an einem Abschirmblech angebrachten Verliersicherung mit darin angeordnetem Befestigungselement zeigt;
Figur 2 eine (teilweise) Schnittansicht einer nicht beanspruchten Ausführungsform der Verliersicherung zeigt; und
Figur 3 eine (teilweise) Schnittansicht einer Verliersicherung mit einer weiteren Ausführungsform der Distanzscheibe zeigt.

### Ausführliche Beschreibung der Erfindung

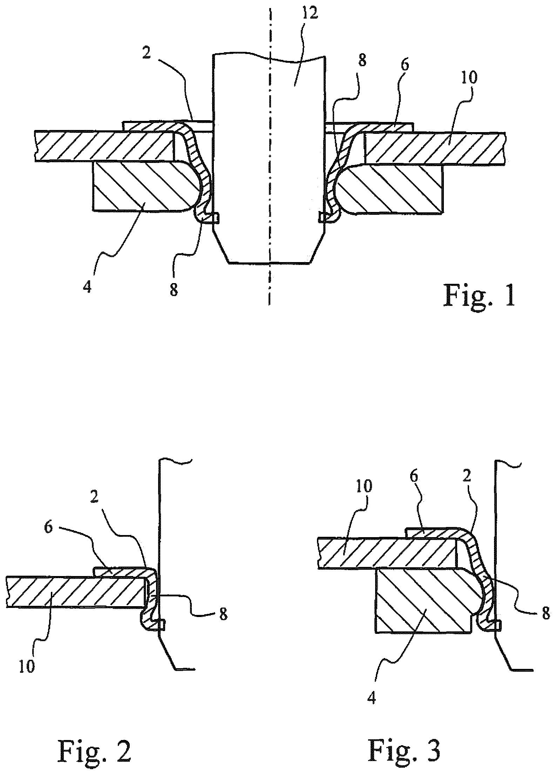

Fig. 1 stellt einen Schnitt durch eine Ausführungsform einer Verliersicherung und Montagehilfe gemäß der vorliegenden Erfindung dar. Die Verliersicherung umfasst eine Fixierscheibe 2 und eine Distanzscheibe 4, die auf einander gegenüberliegenden Seiten eines zu montierenden Abschirmblechs 10 angeordnet sind, wobei sich die Distanzscheibe auf derjenigen Seite des Abschirmblechs befindet, auf welcher sich später das Motorbauteil befindet, an dem das Abschirmblech angebracht werden soll. In der Verliersicherung ist ein Teil eines Befestigungselements 12 vormontiert dargestellt. Statt an einem Abschirmblech kann die Verliersicherung natürlich auch an einem anderen flachen Bauteil angebracht werden. Als Befestigungselement ist insbesondere eine Befestigungsschraube vorgesehen.

Die Fixierscheibe 2 weist zwei Federarme 8 auf, die sich von einem Ringabschnitt 6 der Fixierscheibe 2 ausgehend durch ein Durchgangsloch des Abschirmblechs 10 und eine Öffnung in der Distanzscheibe 4 hindurch erstrecken. Der flache Ringabschnitt 6 umgibt eine Öffnung in der Fixierscheibe 2 und liegt an einer Oberfläche des Abschirmblechs 10 an. Die Federarme 8 sind an einem radial inneren Rand des Ringabschnitts 6 angebracht und erstrecken sich von dort ausgehend im Wesentlichen in eine Richtung senkrecht zum Ringabschnitt. "Im Wesentlichen" heißt hier, dass nicht unbedingt ein Winkel von 90° gebildet werden muss, sondern dieser auch etwas größer oder kleiner sein kann, also z.B. 90° ±20°, solange dies der technischen Funktion nicht hinderlich ist, d.h. die Federarme müssen durch das Durchgangsloch in dem Abschirmblech passen und die im Folgenden beschriebene "Einschnapp"- bzw. "Eingriffs"-Funktion erfüllen können. Vorteilhaft ist hier, dass sich die Federarme etwas nach innen in Richtung einer Mittelachse erstrecken, d.h. dass ein Winkel von 100° - 110° mit dem Ringabschnitt gebildet ist.

In der Nähe eines freien Endes jedes Federarms 8 ist eine Auswölbung radial nach außen an den Federarmen angeordnet. Dabei ist ein größter radialer Abstand der Auswölbungen zu der Mittelachse größer als ein Radius einer Öffnung der Distanzscheibe 4 ("größter" radialer Abstand, da der radiale Abstand aufgrund der Form der Auswölbungen variiert); die Auswölbungen ragen sozusagen über den Rand der Öffnung hinaus. Gleichzeitig ist ein radialer Abstand zur Mittelachse der zwischen Auswölbung und Ringabschnitt 6 liegenden Abschnitte der Federarme 8 so klein, dass diese durch die Öffnung der Distanzscheibe 4 hindurch geführt können, wobei sie beim Einsetzen etwas nach innen gebogen werden. Vorteilhaft ist, dass auch der Federarmabschnitt jedes Federarms 8 zwischen Auswölbung und Ringabschnitt 6 einen radialen Abstand zur Mittelachse aufweist, der etwas größer als der Radius der Öffnung der Distanzscheibe 4 ist (aber kleiner als der entsprechende radiale Abstand der Auswölbung), so dass im eingesetzten Zustand die Federarme 8 etwas gespannt sind und der innere Rand der Distanzscheibe 4 oberhalb der Auswölbungen anliegt.

Die Federarme 8 der Fixierscheibe 2 stehen - im eingesetzten Zustand - formschlüssig mit der Distanzscheibe 4 in Eingriff. Es wird also eine "Clips"- bzw. "Schnapp"-Verbindung zwischen Fixierscheibe 2 und Distanzscheibe 4 hergestellt. Offensichtlich ist die Länge der Federarme 8 an die Dicke der Distanzscheibe 4 und an die Dicke des Abschirmblechs 10, an welchem die Verliersicherung Verwendung finden soll, anzupassen, insbesondere sollte die Länge der Federarme 8 so bemessen sein, dass eine Bewegung senkrecht zum Abschirmblech 10 unterbunden wird. Dem Fachmann ist klar wie dies auszuführen ist. Dies betrifft ebenso eine Anpassung der radialen Abmessungen von Fixierscheibe 2 und Distanzscheibe 4 an die Durchmesser des Befestigungselements 12 und des Durchgangslochs. Die Ausführungsform mit Distanzscheibe ermöglicht insbesondere die Verwendung dünner Abschirmbleche.

Der innere, der Öffnung zugwandte, Rand der Distanzscheibe 4 ist bevorzugt in einer Richtung senkrecht zu der Distanzscheiben-Ebene abgerundet ausgebildet. Dies erleichtert einerseits das Einsetzen der Federarme 8 und führt andererseits dazu, dass die Federarmenden weniger weit über die Kontur der Distanzscheibe hinausstehen.

Bevorzugt weisen die Durchgangslöcher des Abschirmblechs, die Verliersicherung und das Befestigungselement eine im Wesentlichen kreisrunde Form auf, worauf sich auch die Bezeichnungen beziehen. Jedoch kann die Verliersicherung auch bei nicht kreisrunden Durchgangslöchern und eventuell auch eine nicht kreisrunde Verliersicherung Anwendung finden. Die sich auf radiale Abmessungen, bzw. Durchmesser beziehenden Angaben sind dann entsprechend auf Konturabmessungen der nicht kreisrunden Anordnung zu beziehen, so dass die technische Funktion sichergestellt ist. Z.B. können sich diese Bezeichnungen bei unregelmäßiger Form des Durchgangslochs oder einer Öffnung auf den kleinsten Kreis beziehen, der alle Randpunkte des Durchgangslochs bzw. der Öffnung einschließt.

Gemäß einer nicht beanspruchten, in Fig. 2 skizzierten, Ausführungsform ist die Verwendung der Fixierscheibe 2 ohne Distanzscheibe vorgesehen. Dabei wird die "Clips"-Verbindung nicht zwischen Fixierscheibe bzw. deren Federarmen und Distanzscheibe hergestellt, sondern direkt zwischen Fixierscheibe 2 und Abschirmblech 10. Die radialen Abmessungen der Auswölbungen sind in diesem Fall größer als das Durchgangsloch, so dass die Fixierscheibe mit dem Abschirmblech "verclipst" werden kann, wobei die Länge der Federarme 8 an die Dicke des Abschirmblechs 10 angepasst ist. Analog zur oben beschriebenen Abrundung der Distanzscheibe an der Öffnung ist es hier möglich, den Rand des Durchgangslochs abzurunden (nicht dargestellt).

Die freien Enden der Federarme 8, auch als Federarmenden bezeichnet, sind radial nach innen gebogen und konfiguriert, mit dem Befestigungselement 12, z.B. der Befestigungsschraube, in Eingriff zu stehen (in der Figur symbolisch dargestellt). D.h. sie befinden sich so weit radial innen, dass, wenn sich die Federarme 8 im Eingriff mit der Distanzscheibe 4 (bzw. dem Abschirmblech) befinden, die Enden die radial am weitest innenliegen Abschnitte der Fixierscheibe, und mithin der gesamten Anordnung ohne Befestigungselement, bilden, so dass diese mit Vertiefungen in dem Befestigungselement 12, z.B. einem Gewinde einer Befestigungsschraube, in Eingriff gebracht werden können, um das Befestigungselement 12 zu fixieren. Der Abstand der Federarmenden zueinander (in radialer Richtung) ist entsprechend an den Durchmesser des Befestigungselements 12, das verwendet werden soll, angepasst. Das Einbringen des Befestigungselements 12 führt zu einer radial nach außen gerichteten Kraft auf die Federarmenden, und somit zu einer Verstärkung der "Clips"-Verbindung der Fixierscheibe 2. Vorteilhafterweise erstrecken sich die (freien) Federarmenden im Wesentlichen parallel zum Ringabschnitt 6. Weiter ist vorteilhaft, wenn die Federarmenden, genauer deren Endkanten, in einer Richtung parallel zum Ringabschnitt und rechtwinklig zur radialen Richtung, d.h. in Umfangrichtung (also in den Figuren senkrecht zur Zeichenebene), eine Form aufweisen die an die Außenkontur des Befestigungselements angepasst ist, also im Fall eins runden Befestigungselements (Schraube) ebenfalls gerundet verlaufen; und im Fall einer Befestigungsschraube die Schraubengewindeform nachbilden, also in Umfangrichtung gerundet mit einer dem Gewinde entsprechenden Steigung verlaufen.

In Fig. 1 sind beispielhaft zwei Federarme 8 (links, rechts) dargestellt, es ist aber natürlich auch eine andere Anzahl denkbar; bevorzugt sind drei oder vier Federarme, da dies eine Fixierung des Befestigungselements relativ zu der Verliersicherung in alle Bewegungsrichtungen ermöglicht. In Umfangsrichtung (um die Öffnung der Fixierscheibe) ist eine symmetrische Anordnung der Federarme bevorzugt, d.h. die Winkel zwischen Mitten benachbarter Federarme sind jeweils gleich. Es ist auch möglich, hiervon abzuweichen; als Beispiel sei für drei Federarme eine Anordnung genannt, bei welcher zwischen zwei Federarmen ein Winkel von 90° besteht und der dritte zu diesen beiden jeweils einen Winkel von 135° aufweist. Jeder Federarm erstreckt sich in Umfangrichtung über einen Winkelbereich zwischen 10° und 45°, bevorzugt zwischen 20° und 30°.

Die Fixierscheibe besteht aus einem Metall oder Kunststoff, z.B. kann ein Eisenwerkstoff wie Stahl, vorzugsweise ein Federstahl, verwendet werden. Als Material für die Distanzscheibe kann ebenfalls ein Metall verwendet werden, z.B. Stahl, Edelstahl oder auch Aluminium. Fixierscheibe und/oder Distanzscheibe sind vorzugsweise beschichtet um Korrosion vorzubeugen. Um die Übertragung von Schwingungen und Wärme zwischen Abschirmblech und dem Bauteil an dem es angebracht ist zu verringern kann ein Elastomer (z.B. Gummi) verwendet werden. Gegebenenfalls ist dann zwischen Befestigungsschraubenkopf und Fixierelement eine Elastomer-Unterlegscheibe zu verwenden.

Die Dicke der Fixierscheibe liegt im Bereich von 0,2 mm bis 0,5 mm. Die Dicke der Distanzscheibe liegt im Bereich von 0,5 mm bis 5 mm, bevorzugt von 1 mm bis 3 mm, abhängig insbesondere von der Dicke des Abschirmblechs.

Gemäß einer in Fig. 3 skizzierten Ausführungsform (wobei nur eine Hälfte der Anordnung dargestellt ist) weist die Öffnung der Distanzscheibe 4 zwei Bereiche mit unterschiedlichem Durchmesser auf, wobei ein oberer, d.h. ein der Fixierscheibe 2 bzw. dem Abschirmblech 10 zugewandter, Bereich einen kleineren Durchmesser hat als ein unterer Bereich an der anderen Seite der Distanzscheibe 4. Dadurch wird - bei entsprechenden Abmessungen - erreicht, dass die sich radial nach außen erstreckende Auswölbung des Federarms 8 vollständig innerhalb der Kontur der Distanzscheibe untergebracht werden kann und also die Federarme 8, insbesondere deren freie Enden, nicht nach unten über den Rand der Distanzscheibe hinausstehen. Erstreckt sich der untere Bereich weit genug nach oben, ist es auch möglich, das Befestigungselement so zu fixieren, dass es möglichst wenig oder gar nicht über die Distanzscheibe hinaussteht. Eine weitergehende Ausgestaltung (nicht dargestellt) dieser Form ist dahingehend möglich, dass ein Bereich mit größerem Öffnungs-Durchmesser zwischen zwei Bereichen mit kleinerem Öffnungs-Durchmesser gebildet ist.

Ist das Abschirmblech im Bereich des Durchgangslochs hinreichend dick, kann eine solche Durchmesser-Ausgestaltung auch am Durchgangsloch der in Fig. 2 gezeigten aber nicht beanspruchten Ausführungsform Anwendung finden (nicht dargestellt). Ein Bereich des Durchgangslochs weist dann an einer Seite des Abschirmblechs (welche dem Motorbauteil zugewandt ist, an dem das Abschirmblech angebracht werden soll) einen größeren Durchmesser auf, als in einem Bereich an der gegenüberliegenden Seite des Abschirmblechs, der entsprechend einen kleineren Durchmesser hat. Die Auswölbung kann dann im Bereich mit dem größeren Durchmesser untergebracht werden.

Weiter ist vorgesehen, ein Abschirmblech bereitzustellen, das an einem Befestigungsloch, d.h. einem Durchgangsloch, oder mehreren Befestigungslöchern mit mindestens einer Verliersicherung versehen ist, in welcher ein Befestigungselement (Befestigungsschraube) verliersicher vormontiert werden kann. Dadurch lässt sich der Arbeitsgang der Montage des Abschirmblechs rationeller gestalten, da bei der Endmontage der konfektionierten Abschirmbleche am Motor der Werker nicht mehr jede Befestigungsschraube einzeln aufnehmen, zuführen und verschrauben muss. Die Befestigungselemente werden zunächst vormontiert, was eventuell auch bei der Herstellung des Abschirmblechs geschehen kann, der Werker muss dann das Abschirmblech nur noch in seine Montageposition bringen und kann danach die vormontierten Befestigungsschrauben direkt verschrauben, was zu einer Taktzeit-Reduzierung bei der Montage führt.

Bevorzugt sind die radialen Abmessungen von Fixierscheibe, Distanzscheibe und Durchgangsloch des Abschirmblechs so ausgelegt, dass die Verliersicherung - und mit ihr das Befestigungselement - in radialer Richtung, also parallel zur Ebene des Abschirmblechs, verschoben werden kann; dies ermöglicht es, Fertigungstoleranzen auszugleichen. Die äußeren Durchmesser von Fixierscheibe und Distanzscheibe sind also größer als der Durchgangsloch-Durchmesser und (im "verclipsten" Zustand) die radial äußere Abmessung der Federarme, d.h. der Durchmesser des kleinsten Kreises, welcher alle Federarme einschließt, sind kleiner als Durchgangsloch-Durchmesser. Entsprechend ist bevorzugt der Durchmesser des Durchgangslochs größer als die Durchmesser der Öffnungen von Fixierscheibe und Distanzscheibe.

Insbesondere erlaubt dies Durchgangslöcher mit einer länglichen Form zu verwenden; "längliche Form" soll heißen, dass eine Länge des Durchgangslochs deutlich größer (z.B. mindestens zweimal so groß) als eine Breite des Durchgangslochs ist, wobei die längliche Form nicht unbedingt entlang einer Gerade gebildet werden muss, sondern z.B. auch eine gekrümmte Form oder eine Form mit einem Knick bilden kann. Die Abmessungen der Verliersicherung sind dann an die Breite angepasst, d.h. die äußeren Durchmesser von Fixierscheibe und Distanzscheibe müssen größer sein als die Durchgangsloch-Breite, damit die Verliersicherung befestigt werden kann. Diese Ausgestaltung ermöglicht es die Verliersicherung, und damit das Befestigungselement, entlang der länglichen Form über eine größere Strecke zu verschieben.

### Bezugszeichenliste

- 2: Fixierscheibe
- 4: Distanzscheibe
- 6: Ringabschnitt
- 8: Federarm
- 10: Abschirmblech
- 12: Befestigungselement

## Patentansprüche

1. Verliersicherung für ein Befestigungselement (12), umfassend eine Fixierscheibe (2) mit einer Öffnung für das Befestigungselement (12); wobei die Fixierscheibe (2) einen flachen Ringabschnitt (6) umfasst, der die Öffnung umgibt, und mindestens zwei Federarme (8) umfasst, die an einem radial inneren Rand des Ringabschnitts (6) angeordnet sind und sich in eine Richtung im Wesentlichen senkrecht zum Ringabschnitt (6) erstrecken;
wobei jeder der Federarme (8) in der Nähe eines freien Federarmendes eine Auswölbung radial nach außen aufweist; und
wobei die Federarmenden radial nach innen gebogen sind;
**gekennzeichnet dadurch, dass** die Verliersicherung weiterhin eine Distanzscheibe (4) umfasst;
wobei die Federarme (8) durch eine Öffnung in der Distanzscheibe (4) mit der Distanzscheibe (4) in Eingriff gebracht werden können; und
wobei ein radial größter Abstand der Auswölbungen von einer Mittelachse größer ist als ein Radius der Öffnung der Distanzscheibe (4).

2. Verliersicherung gemäß Anspruch 1, wobei die Federarmenden konfiguriert sind, mit dem Befestigungselement (12) in Eingriff zu stehen.

3. Verliersicherung gemäß einem der vorstehenden Ansprüche, wobei die Federarmenden den radial am weitesten innenliegenden Teil der Fixierscheibe (2) bilden.

4. Verliersicherung gemäß einem der vorstehenden Ansprüche, wobei sich die Federarme (8) in Umfangrichtung jeweils über einen Winkelbereich von 10° bis 45°, bevorzugt 20° bis 30°, erstrecken.

5. Verliersicherung gemäß einem der Ansprüche 1 - 4, wobei die Öffnung der Distanzscheibe (4) in einem oberen Bereich einen kleineren Durchmesser aufweist als in einem unteren Bereich, so dass die Auswölbung des Federarms (8) vollständig innerhalb der Kontur der Distanzscheibe untergebracht werden kann.

6. Verliersicherung gemäß einem der Ansprüche 1 - 5, wobei die Distanzscheibe (4) innen, an dem die Öffnung umgebenden Rand, abgerundet ist.

7. Verliersicherung gemäß einem der Ansprüche 1 - 6, wobei die Distanzscheibe (4) aus einem Elastomer besteht.

8. Abschirmblech (10) mit Montagehilfe für ein Motorbauteil,
wobei das Abschirmblech (10) mit mindestens einem Durchgangsloch für ein Befestigungselement (12) versehen ist; und
wobei das Abschirmblech (10) mindestens eine Verliersicherung gemäß einem der Ansprüche 1 - 7 umfasst;
wobei die Fixierscheibe (2) und die Distanzscheibe (4) der mindestens einen Verliersicherung an gegenüberliegenden Seiten des Abschirmblechs (10) angeordnet sind, wobei die Federarme (8) der Fixierscheibe (2) durch das Durchgangsloch bzw. eines der Durchgangslöcher hindurchverlaufen und von innen mit der Distanzscheibe (4) in Eingriff stehen.

9. Abschirmblech (10) gemäß Anspruch 8, wobei ein Durchmesser des mindestens einen Druchgangslochs größer ist als ein Durchmesser der Öffnungen der Fixier- und der Distanzscheibe.

10. Abschirmblech (10) gemäß einem der Ansprüche 8 - 9, wobei ein Durchmesser des mindestens einen Druchgangslochs größer ist als eine radial äußere Abmessung der Federarme (8), und wobei die äußeren Durchmesser von Ringabschnitt (6) und Distanzscheibe (4) größer sind als der Durchmesser des mindestens einen Durchgangslochs.

11. Abschirmblech (10) gemäß Anspruch 8, wobei das Durchgangsloch eine längliche Form, nämlich eine Form, bei der eine Länge des Durchgangslochs mindestens zweimal so groß ist wie eine Breite des Durchgangslochs, aufweist; und wobei die äußeren Durchmesser von Fixierscheibe (2) und Distanzscheibe (4) größer als die Breite des Durchgangslochs ist.

12. Abschirmblech (10) gemäß einem der Ansprüche 8 - 11, weiterhin umfassend mindestens ein Befestigungselement (12), das in der mindestens einen Verliersicherung verliersicher angeordnet ist.

## Claims

1. Loss prevention device for a fastening element (12), comprising a fixing washer (2) having an opening for the fastening element (12);
wherein the fixing washer (2) comprises a flat ring portion (6) which surrounds the opening, and comprises at least two spring arms (8) which are arranged on a radially inner edge of the ring portion (6) and extend in a direction substantially perpendicular to the ring portion (6);
wherein each of the spring arms (8) has a bulge radially outward in the vicinity of a free spring arm end; and
wherein the spring arm ends are bent radially inward, **characterized in that** the loss prevention device further comprises a spacer washer (4);
wherein the spring arms (8) can be brought into engagement with the spacer washer (4) through an opening in the spacer washer (4); and
wherein a radially greatest distance of the bulges from a central axis is greater than a radius of the opening of the spacer washer (4).

2. Loss prevention device according to claim 1, wherein the spring arm ends are designed to be in engagement with the fastening element (12).

3. Loss prevention device according to either of the preceding claims, wherein the spring arm ends form the radially innermost part of the fixing washer (2).

4. Loss prevention device according to any of the preceding claims, wherein the spring arms (8) each extend in the circumferential direction over an angular range of from 10° to 45°, preferably 20° to 30°.

5. Loss prevention device according to any of claims 1-4, wherein the opening of the spacer washer (4) has a smaller diameter in an upper region than in a lower region, such that the bulge of the spring arm (8) can be completely housed within the contour of the spacer washer.

6. Loss prevention device according to any of claims 1-5, wherein the spacer washer (4) is rounded on the inside, on the edge surrounding the opening.

7. Loss prevention device according to any of claims 1-6, wherein the spacer washer (4) consists of an elastomer.

8. Shielding plate (10) having a mounting aid for an engine component, wherein the shielding plate (10) is provided with at least one through-hole for a fastening element (12); and
wherein the shielding plate (10) comprises at least one loss prevention device according to any of claims 1-7;
wherein the fixing washer (2) and the spacer washer (4) of the at least one loss prevention device are arranged on opposite sides of the shielding plate (10), wherein the spring arms (8) of the fixing washer (2) extend through the through-hole or one of the through-holes and engage with the spacer washer (4) from the inside.

9. Shielding plate (10) according to claim 8, wherein a diameter of the at least one through-hole is larger than a diameter of the openings in the fixing washer and the spacer washer.

10. Shielding plate (10) according to either claim 8 or claim 9, wherein a diameter of the at least one through-hole is larger than a radially outer dimension of the spring arms (8), and wherein the outer diameters of the ring portion (6) and spacer washer (4) are larger than the diameter of the at least one through-hole.

11. Shielding plate (10) according to claim 8, wherein the through-hole has an elongate shape, specifically a shape in which a length of the through-hole is at least twice as large as a width of the through-hole; and
wherein the outer diameters of the fixing washer (2) and spacer washer (4) are larger than the width of the through-hole.

12. Shielding plate (10) according to any of claims 8-11, further comprising at least one fastening element (12) which is arranged in the at least one loss prevention device in a loss preventing manner.

## Revendications

1. Dispositif de protection anti-perte d'un élément de fixation (12), comprenant une rondelle de fixation (2) ayant une ouverture pour l'élément de fixation (12) ;
dans lequel la rondelle de fixation (2) comprend une partie annulaire plate (6) entourant l'ouverture et au moins deux bras à ressort (8) disposés sur un bord radialement intérieur de la partie annulaire (6) et s'étendant dans une direction sensiblement perpendiculaire à la partie annulaire (6) ;
dans lequel chacun des bras à ressort (8) présente un bombement radial vers l'extérieur à proximité d'une extrémité libre du bras à ressort ; et
dans lequel les extrémités du bras à ressort sont pliées radialement vers l'intérieur ; **caractérisé en ce que** le dispositif de protection anti-perte comprend en outre une rondelle entretoise (4) ;
dans lequel les bras à ressort (8) peuvent venir en prise avec la rondelle entretoise (4) à travers une ouverture dans la rondelle entretoise (4) ; et
dans lequel la distance radiale la plus grande des bombements par rapport à un axe central est supérieure à un rayon de l'ouverture de la rondelle entretoise (4).

2. Dispositif de protection anti-perte selon la revendication 1, dans lequel les extrémités des bras à ressort sont configurées pour venir en prise avec l'élément de fixation (12).

3. Dispositif de protection anti-perte selon l'une des revendications précédentes, dans lequel les extrémités du bras à ressort forment la partie la plus radialement intérieure de la rondelle de fixation (2).

4. Dispositif de protection anti-perte selon l'une des revendications précédentes, dans lequel les bras à ressort (8) s'étendent chacun dans la direction circonférentielle sur une plage angulaire de 10 à 45 °, de préférence de 20 à 30 °.

5. Dispositif de protection anti-perte selon l'une des revendications 1 à 4, dans lequel le diamètre de l'ouverture de la rondelle entretoise (4) dans une zone supérieure est plus petit que dans une zone inférieure, de sorte que le bombement du bras à ressort (8) peut être entièrement logé à l'intérieur du contour de la rondelle entretoise.

6. Dispositif de protection anti-perte selon l'une des revendications 1 à 5, dans lequel la rondelle entretoise (4) est arrondie à l'intérieur, au niveau du bord entourant l'ouverture.

7. Dispositif de protection anti-perte selon l'une des revendications 1 à 6, dans lequel la rondelle entretoise (4) est constituée d'un élastomère.

8. Tôle de blindage (10) dotée d'un auxiliaire de montage pour une pièce de moteur, la tôle de blindage (10) étant munie d'au moins un trou traversant pour un élément de fixation (12) ; et
la tôle de blindage (10) comprenant au moins un dispositif de protection anti-perte selon l'une des revendications 1 à 7 ;
sachant que la rondelle de fixation (2) et la rondelle entretoise (4) de l'au moins un dispositif de protection anti-perte sont disposées sur des côtés opposés de la tôle de blindage (10), dans laquelle les bras à ressort (8) de la rondelle de fixation (2) s'étendent à travers le trou traversant ou l'un des trous traversants et viennent en prise avec la rondelle entretoise (4) de l'intérieur.

9. Tôle de blindage (10) selon la revendication 8, dans laquelle le diamètre d'au moins un trou traversant est supérieur à celui des ouvertures de la rondelle de fixation et de la rondelle entretoise.

10. Tôle de blindage (10) selon l'une des revendications 8 à 9, dans laquelle un diamètre dudit au moins un trou traversant est supérieur à une dimension radialement extérieure des bras à ressort (8), et dans laquelle les diamètres extérieurs de la partie annulaire (6) et de la rondelle entretoise (4) sont supérieurs au diamètre dudit au moins un trou traversant.

11. Tôle de blindage (10) selon la revendication 8, dans laquelle le trou traversant présente une forme allongée, à savoir une forme où une longueur du trou traversant est au moins deux fois plus grande qu'une largeur du trou traversant ; et
dans laquelle les diamètres extérieurs de la rondelle de fixation (2) et de la rondelle entretoise (4) sont supérieurs à la largeur du trou traversant.

12. Tôle de blindage (10) selon l'une des revendications 8 à 11, comprenant en outre au moins un élément de fixation (12) qui est disposé dans l'au moins un dispositif de protection anti-perte.
